# FASCICULE DE BREVET EUROPEEN

(11) **EP 1 541 394 B1**
(45) Date de publication et mention de la délivrance du brevet: **04.03.2009**
(21) Numéro de dépôt: 03293092.7
(22) Date de dépôt: 10.12.2003
(51) Int. Cl.: B60G 21/055

(54) **Système de débrayage d'une barre antiroulis de véhicule automobile**
Kupplungssystem für einen Stabilisatorstab eines Kraftfahrzeugs
Coupling system for a stabilizer bar of a motor vehicle

(43) Date de publication de la demande: 15.06.2005
(73) Titulaire: Delphi Technologies, Inc., Troy, MI 48007 (US)
(72) Inventeur: Blanchard, Arnaud, 92200 Neuilly/Seine (FR)
(74) Mandataire: Denton, Michael John

(56) Documents cités:
- EP-A- 1 157 865
- DE-A- 10 242 552
- US-A1- 2002 180 167
- US-B1- 6 425 585

## Description

La présente invention concerne un dispositif anti-roulis semi-actif électromécanique.

Lorsqu'un véhicule tourne, l'accélération latérale produit un moment, orienté selon l'axe longitudinal du véhicule, entraînant un changement de l'assiette de la caisse du véhicule : les jambes de force des roues placées à l'intérieur du virage subissent une charge différente de celle que subissent les jambes de force des roues placées à l'extérieur du virage. Par rapport à la caisse, les supports de roue se déplacent d'une quantité différente le long de l'axe (quasiment vertical) des jambes de force. Par rapport à l'axe passant par les roues d'un train de roues, la caisse est inclinée d'un angle dit de roulis.

Afin de réduire le roulis d'un véhicule, il est connu de munir le train de roues avant et/ou le train de roues arrière d'un dispositif anti-roulis passif. Ce dernier consiste en une barre de torsion, de forme globalement en U, comportant une portion centrale rectiligne orientée selon l'axe des roues du train de roues, et deux bras situés à chacune des extrémités de ladite portion centrale selon une direction globalement perpendiculaire à cette dernière. La portion centrale de la barre de torsion est solidaire de la caisse. Les extrémités libres des bras de la barre de torsion, situées à l'opposé des extrémités connectées à la portion centrale, sont respectivement reliées à chacun des supports de roue (par exemple, sur le porte moyeu ou la portion inférieure de la jambe de force de chacune des roues).

Dans un virage, la différence de quantité de déplacement vertical des supports de roue déforme la barre de torsion de manière à ce qu'un angle de torsion apparaisse entre les bras de celle-ci. Un couple de rappel élastique est alors crée par la barre de torsion qui s'oppose au mouvement des supports de roue et réduit le mouvement de roulis de la caisse. Aucune énergie n'est apportée au dispositif anti-roulis qui est en conséquence qualifié de passif.

Bien que le roulis du véhicule soit amélioré dans les virages et, par voix de conséquence, le confort des passagers, la barre de torsion réduit le rôle d'amortissement des jambes de force. En ligne droite, un choc causé par une aspérité sur la route sera ressenti par les passagers. De plus, la maniabilité du véhicule est modifiée.

Des dispositifs anti-roulis actifs sont connus. Par exemple, le document US 6 425 585 divulgue un dispositif anti-roulis actif électromécanique. Dans ce dispositif, la barre anti-roulis en forme de U est constituée de deux demi-barres reliées l'une à l'autre au niveau de la portion centrale de ladite barre anti-roulis au moyen d'un mécanisme d'entraînement en rotation. Le mécanisme d'entraînement en rotation comporte un moteur électrique solidaire d'une première des demi-barres. L'arbre moteur du moteur électrique est couplé su côté de faible couple d'un amplificateur de couple à engrenages. Le côté de couple élevé de l'amplificateur de couple est relié à la deuxième demi-barres. EN fonction de paramètres de roulis mesurés par des capteurs, une unité de contrôle actionne le moteur électrique.

Lorsque le moteur électrique est alimenté les première et deuxième demi-barres sont couplées l'une à l'autre. En revanche, lorsqu'il n'est pas alimenté, les première et deuxième demi-barres sont découplées l'une de l'autre. Il est à noter que dans le mode de réalisation décrit dans le brevet américain, le chemin de propagation des efforts d'une roue à l'autre passe par le moteur électrique.

Le moteur électrique est alimenté de manière à créer un angle entre les extrémités libres des première et deuxième demi-barres, ou, dit autrement, de manière à appliquer un contre couple dur la caisse du véhicule apte à compenser le mouvement de roulis de celle-ci.

Par ailleurs, le dispositif anti-roulis actif décrit dans ce document comporte un système de freinage permettant de coupler l'arbre moteur connecté au côté de faible couple de l'amplificateur avec le bâti du mécanisme d'entraînement auquel sont fixés solidairement la première demi-barre et le stator du moteur électrique.

Ainsi, lorsque l'angle cible entre les extrémités des première et deuxième demi-barre est atteint le système de freinage est actionné afin de générer un couple de freinage permettant de maintenir les deux demi-barres dans une orientation angulaire relative et autorisant de désactiver le moteur électrique. Ceci permet de ne pas consommer trop d'énergie électrique pour maintenir le contre couple.

Il est également à noter que dans le mode de réalisation décrit dans ce document le rotor du moteur électrique est fixe relativement à la première des demi-barre. Le moteur électrique entraîne uniquement en rotation la deuxième demi-barre. L'équilibrage des couples appliqués sur la caisse entraîne le mouvement du stator relativement à la caisse.

Incidemment, le système de freinage autorise un glissement relatif des deux demi-barres entre elles lorsqu'un couple extérieur trop élevé est appliqué au mécanisme d'entraînement de manière à protéger le moteur électrique.

Il existe un problème majeur avec les dispositifs anti-roulis actifs comportant des moteurs électriques. Il faut en effet que le moteur soit réactif pour mettre en position relative les deux demi-barres entre elles. Un temps de réponse inférieur à 200 ms est demandé qu'il est difficile d'atteindre.

Dans ce dispositif, de l'énergie est apportée pour appliquer le contre couple, d'où le qualificatif d'actif. De tels dispositifs anti-roulis actifs électromécaniques sont coûteux puisqu'ils comportent un moteur électrique. Leur réglage et leur maintenance sont délicates.

Des dispositifs anti-roulis semi-actifs électromécaniques sont également connus. Ces dispositifs anti-roulis permettent un couplage ou un découplage sélectif des première et deuxième demi-barres. En revanche, aucune précontrainte n'est introduite entre les deux demi-barres. De tels dispositif anti-roulis ne nécessitent pas d'énergie et sont dits semi-actifs. Le document EP 1 157 586 divulgue une série de modes de réalisation d'un dispositif anti-roulis semi-actif électromécaniques comportant des embrayages électromécaniques permettant de coupler/découpler les deux demi-barres en fonction d'une commande émise par une unité de contrôle sur la base de mesures du déplacement des jambes de force relevées par des capteurs appropriés. Le couplage/découplage peut être par exemple du type "tout ou rien" ou du type "proportionnel" de manière à ce qu'un impact sur une roue ne soit pas transmis à l'autre roue.

Les dispositifs anti-roulis semi-actifs décrits sont complexes. En cas de défaillance de l'un des éléments de la chaîne de couplage/découplage, allant du capteur au système d'embrayage, aucun mode par défaut n'est prévu. De plus, le couplage entre les deux demi-barres est réalisé directement par le système d'embrayage qui, par conséquent, transfert des couples importants d'une demi-barre à l'autre. Les pièces sont alors soumises à des contraintes mécaniques élevées et à une usure rapide.

L'invention a pour but de résoudre les inconvénients précités en proposant un dispositif anti-roulis semi-actif électromécanique amélioré.

Pour cela, la présente invention a pour objet un dispositif anti-roulis semi-actif électromécanique pour équiper au moins un train de roues d'un véhicule automobile, chacune des roues dudit train de roues étant couplée avec une mobilité verticale à une caisse dudit véhicule au moyen d'une jambe de force, ledit dispositif anti-roulis comportant :
- une barre de torsion en forme de U ayant une portion centrale destinée à être montée solidairement à ladite caisse et parallèlement à un axe dudit train de roues, et des premier et deuxième bras latéraux dont les extrémités libres sont destinées à être respectivement couplées audites jambes de force ; ladite barre de torsion étant composée d'une première demi-barre et d'une deuxième demi-barre reliées l'une à l'autre au niveau de ladite portion centrale au moyen d'un mécanisme électromécanique de couplage/découplage apte à être actionné pour coupler/découpler lesdites première et deuxième demi-barres entre elles ;
- au moins un capteur apte à mesurer au moins une variable cinématique dudit véhicule ; et,
- une unité de commande apte à acquérir ladite au moins une variable cinématique, à calculer une variable d'état de roulis caractérisant une situation de roulis dudit véhicule, et à émettre un signal de commande correspondant à ladite variable d'état en direction dudit mécanisme électromécanique de couplage/découplage pour actionner ce dernier ;
ledit dispositif étant caractérisé en ce que ledit mécanisme électromécanique de couplage/découplage comporte un moyen électromécanique de verrouillage/déverrouillage, un système mécanique d'amplification de couple, ledit moyen électromécanique de verrouillage/déverrouillage étant couplé à un côté de faible couple dudit système mécanique d'amplification, lesdites première et deuxième demi-barres étant couplées du côté de couple élevé dudit système mécanique d'amplification ; et en ce que ledit mécanisme de couplage/découplage ne comporte pas de moteur électrique apte à entraîner en rotation ladite première demi-barre relativement à ladite deuxième demi-barre.

Ledit système mécanique d'amplification comporte des premier et deuxième ensembles d'amplification, ladite première demi-barre étant couplée du côté de couple élevé dudit premier ensemble d'amplification, ladite deuxième demi-barre étant couplée du côté de couple élevé dudit deuxième ensemble d'amplification et en position verrouillée dudit moyen électromécanique de verrouillage/déverrouillage, les côtés de faible couple desdits premier et deuxième ensembles d'amplification sont couplés l'un à l'autre.

De plus, lesdits premier et deuxième ensembles d'amplification comportent respectivement deux étages successifs d'amplification qui sont constitués par des engrenages.

Le mécanisme électromécanique de couplage/découplage comporte un élément de contrainte apte à contraindre le mouvement du côté de couple élevé dudit premier ensemble amplificateur relativement au mouvement du côté de couple élevé dudit deuxième ensemble amplificateur de sorte que lorsque le moyen électromécanique de verrouillage/déverrouillage est en position verrouillée, tout déplacement dudit élément de contrainte est rendu impossible, les efforts passant alors de la première à la deuxième demi-barre au travers dudit élément de contrainte.

Ledit moyen électromécanique de verrouillage/déverrouillage est un frein électromécanique apte à appliquer un couple de blocage.

Ledit frein électromécanique est apte à ne générer que des couples de blocage de quelques newton-mètres suffisant pour coupler les première et deuxième demi-barres.

Ledit moyen électromécanique de verrouillage/déverrouillage est apte à quitter la position verrouillée lorsqu'un couple de charge qui lui est appliqué a une amplitude supérieure à l'amplitude d'un couple de charge seuil prédéterminé.

Ladite unité de commande actionne ledit moyen électromécanique de verrouillage/déverrouillage selon un mode "tout ou rien".

L'invention concerne également un véhicule automobile comportant au moins un train de roues, chacune des roues dudit train de roues étant couplée avec une mobilité verticale à une caisse dudit véhicule par l'intermédiaire d'une jambe de force, comportant un dispositif anti-roulis semi-actif électromécanique selon l'invention.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- la figure 1 est une vue partielle en perspective de la barre de torsion munie du dispositif anti-roulis semi-actif électromécanique selon la présente invention, couplée à la jambe de force d'un support de roue du train de roues ; et,
- la figure 2 est un schéma de principe d'un premier mode de réalisation du mécanisme de couplage/découplage du dispositif selon l'invention ;
- la figure 3 est une coupe axiale d'un deuxième mode de réalisation du mécanisme de couplage/découplage du dispositif selon l'invention.

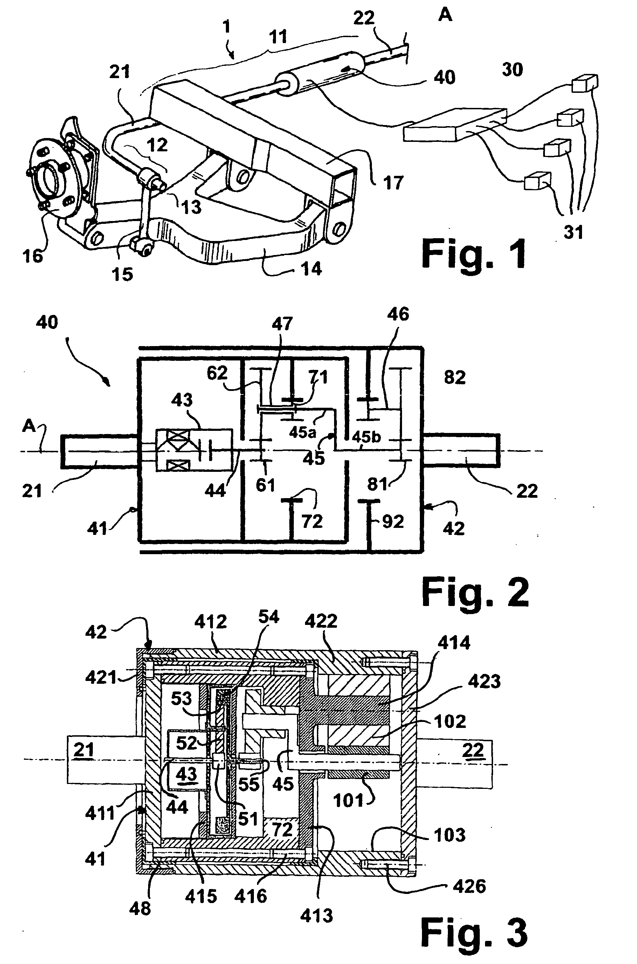

La figure 1 montre partiellement une barre de torsion 1 constituant la partie mécanique du dispositif anti-roulis semi-actif électromécanique selon l'invention. La barre de torsion 1 est en forme de U. Elle comporte une portion centrale 11 et deux bras latéraux 12 dont un seul est représenté sur la figure 1. La portion centrale 11 de la barre de torsion 1 s'étend selon un axe dit principal A parallèle à l'axe des roues du train de roues qu'elle équipe. La portion centrale 11 est connectée à la caisse du véhicule d'une manière connue et non représentée.

L'extrémité libre 13 du bras latéral 12, opposée à l'extrémité connectée à la portion centrale 11, est couplée à un triangle de roue 14 au moyen, par exemple, d'un bras de liaison 15. Le triangle de roue 14 qui fait partie de manière générale de la jambe de force de fixation de la roue est muni d'un support de roue 16. Le triangle de roue 14 est par ailleurs relié à la caisse du véhicule au moyen d'une suspension dont une portion 17 est représentée sur la figure 1.

La barre de torsion 1 est constituée d'une première demi-barre 21 et d'une deuxième demi-barre 22 reliées l'une à l'autre le long de la portion centrale 11 au moyen d'un mécanisme de couplage/découplage 40 qui sera décrit en détail ci-dessous. Le véhicule automobile comporte une série de capteurs 31 aptes à mesurer des variables physiques dont certaines permettent de caractériser ou d'anticiper une situation de roulis. Par exemple, un capteur d'accélération latérale permet de mesurer l'accélération latérale de la caisse du véhicule qui est un paramètre cinématique dont dépend directement le roulis. Ou encore, des capteurs de vitesse de roues permettant d'évaluer la vitesse du véhicule et un capteur mesurant l'angle de braquage du volant de direction permettent d'anticiper la trajectoire souhaitée par le conducteur du véhicule et donc une situation de roulis.

Ces capteurs 31 sont connectés via une interface d'acquisition à une unité de contrôle 30 possédant toutes les caractéristiques matérielles et logicielles d'un micro-ordinateur embarqué. En fonction des mesures instantanées réalisées par les capteurs 31, l'unité de contrôle 30 calcule une variable d'actionnement du mécanisme de couplage/découplage 40. L'unité de contrôle 30 émet alors, sur un port de sortie, un signal d'actionnement dont la valeur correspondant à tout instant à la valeur de la variable d'actionnement calculée.

La figure 2 représente un schéma de principe du mécanisme de couplage/découplage 40 selon un premier mode de réalisation. Le mécanisme de couplage/découplage 40 comporte un premier boîtier 41 fixé à la première demi-barre 21 et un deuxième boîtier 42 fixé à la deuxième demi-barre 42. Les premier et deuxième boîtiers 41 et 42 sont de forme globalement cylindrique et ont pour axe l'axe principal A. Le deuxième boîtier 42 reçoit intérieurement le premier boîtier 41.

Le premier boîtier 41 comporte un frein électromécanique 43 constituant un moyen de verrouillage/déverrouillage électromécanique qui est commandé par l'unité de contrôle 30. Le frein électromécanique 43 est solidaire du premier boîtier 41. Il comporte un arbre de sortie 44 dont l'axe se confond avec l'axe principal A et dont l'extrémité est couplée au côté de faible couple d'un système amplificateur de couple.

Dans ce qui suit, le pignon est la roue de l'engrenage ayant le plus petit diamètre.

L'extrémité de l'arbre de sortie 44 est munie d'un premier pignon 61 denté. Le premier pignon 61 denté s'engrène parallèlement avec une première roue 62 dentée pour former un premier engrenage planétaire cylindrique.

La première roue 62 dentée est montée à une extrémité d'un premier arbre relais 47 situé hors de l'axe principal. L'autre extrémité du premier arbre relais 47 est munie d'un deuxième pignon 71 denté s'engrenant avec une deuxième roue 72 dentée intérieurement afin de former un deuxième engrenage parallèle cylindrique à contact intérieur. La deuxième roue 72 dentée est formée sur la paroi du premier boîtier 41 de manière à faire saillie radialement vers l'intérieur.

Les premier et deuxième engrenages forment un premier ensemble d'amplification. Le frein électromécanique est couplé du côté de faible couple du premier ensemble d'amplification. Le premier boîtier et donc la première demi-barre est couplée du côté de couple élevé du premier ensemble d'amplification.

Le premier arbre relais 47 est muni d'un alésage axial recevant, libre en rotation, une première portion 45a d'un arbre en baïonnette 45. La deuxième portion 45b de l'arbre en baïonnette 45 coïncide avec l'axe principal A.

La deuxième portion 45b de l'arbre en baïonnette 45 fait saillie axialement hors du premier boîtier 41. L'extrémité de la deuxième portion 45b porte un troisième pignon 81 denté apte à engrener une troisième roue 82 dentée pour former un troisième engrenage cylindrique à contact extérieur.

L'arbre déporté de la troisième roue 82, dit deuxième arbre relais 46, comporte, à son autre extrémité, un quatrième pignon 91 denté s'engrenant avec une quatrième roue 92 dentée intérieurement pour former un quatrième engrenage cylindrique à contact interne. La quatrième roue 92 dentée est formée sur la paroi axiale du deuxième boîtier 42 de manière à faire saillie radialement vers l'intérieur.

Les troisième et quatrième engrenages forment un deuxième ensemble d'amplification. Le frein électromécanique est couplé du côté de faible couple du deuxième ensemble d'amplification. Le deuxième boîtier et donc la deuxième demi-barre est couplée du côté de couple élevé du deuxième ensemble d'amplification.

Lorsque la deuxième demi-barre 22 subit une rotation autour de l'axe principal A, d'un angle α₂₂ arbitrairement orienté positivement, le quatrième pignon 91 entraîne la troisième roue 82 en rotation autour du deuxième arbre relais 46 d'un angle α₄₆ également positif. En conséquence, le troisième pignon 81, et l'arbre en baïonnette 45 qui lui est solidaire, subissent une rotation autour de l'axe principal A d'un angle négatif α₄₅.

Deux cas sont alors possibles. Dans un premier cas, le frein électromécanique 43 n'est pas verrouillé. L'arbre de sortie 44 et le premier pignon 61 sont libres en rotation. Il n'existe donc pas de contrainte due au premier pignon 61 sur le roulement de la première roue 62. Celle-ci est simplement entraînée par l'arbre en baïonnette 45. En conséquence, le deuxième pignon 71, couplé à la première roue 62, roule le long de la denture intérieure de la deuxième roue 72 sans transférer de couple. Le premier boîtier 41 ainsi que la première demi-barre 21 ne sont pas mis en rotation autour de l'axe principal A. Les première et deuxième demi-barres 21 et 22 sont découplées l'une de l'autre.

Dans un deuxième cas, le frein électromécanique 43 est verrouillé. Le frein électromécanique 43 applique un couple de blocage sur l'arbre de sortie 44. L'arbre de sortie 44 et le premier pignon 61 sont bloqués en position fixe. Ils forment alors une contrainte sur le roulement de la première roue 62 par ailleurs entraînée en rotation par le mouvement de rotation d'un angle négatif α₄₅ de l'arbre en baïonnette 45. La première roue 62 tourne alors autour de la première portion 46 de l'arbre en baïonnette 45a selon un angle positif α₆₂. Par construction, le deuxième pignon 71 est également en rotation et entraîne la denture intérieure de la deuxième roue 72 en rotation selon un angle positif α₇₂ autour de l'axe principal A. Un couple est ainsi transmis de la deuxième demi-barre 22 vers la première demi-barre 21, cette dernière étant mise en rotation dans le même sens que la deuxième demi-barre 22.

Bien évidemment un raisonnement équivalent partant d'un déplacement de la première demi-barre 21 montrerait que la deuxième demi-barre 22 est entraînée en rotation uniquement lorsque le frein électromécanique 43 est verrouillé.

Il est à noter que, étant donnés les rapports des différents engrenages, le frein électromécanique 43 est situé du côté de faible couple des amplificateurs que constituent respectivement l'ensemble formé par les premier et deuxième engrenages du côté de la première demi-barre 21 et l'ensemble formé par les troisième et quatrième engrenages du côte de la deuxième demi-barre 22. Ainsi, alors qu'une demi-barre de torsion peut subir des couples pouvant être de l'ordre de 1500 Nm, le frein électromécanique n'a qu'un faible couple à appliquer, de l'ordre de quelques Newton mètre, pour assurer le couplage des premières et deuxièmes demi-barres 21 et 22 entre elles. Par exemple, le frein électromécanique 43 doit appliquer un couple de 40 Nm pour assurer le couplage des deux demi-barres 21 et 22. De ce fait la gamme des freins électromécaniques, ou plus largement des moyens de verrouillage/déverrouillage qui peuvent être utilisés dans la mise en oeuvre de l'invention est étendue.

La figure 3 montre une coupe axiale d'un deuxième mode de réalisation du mécanisme de couplage/découplage de l'invention.

Les éléments identiques au premier mode de réalisation sont repérés par les mêmes chiffres de référence.

La première demi-barre 21 est couplée avec un premier boîtier 41 cylindrique. Ce dernier est constitué d'un élément formant paroi axiale 412, d'une première paroi radiale d'extrémité 411 ne faisant qu'une unité avec la première demi-barre 21, une deuxième paroi radiale d'extrémité 413 fermant le premier boîtier 41, et un ensemble formant une paroi radiale interne 415. La deuxième paroi radiale d'extrémité 413 comporte une saillie axiale cylindrique orientée vers l'extérieur du premier boîtier 41 et formant un arbre 414 hors de l'axe principal A. Les premier et deuxième parois radiales d'extrémité 411 et 413 sont fixées à l'élément formant paroi axiale 412 par un ensemble de vis 416.

De manière similaire, le second boîtier 42 comporte un élément formant paroi axiale 422 de forme globalement cylindrique auquel sont fixées, par l'intermédiaire de vis 426, des première et deuxième parois radiales 421 et 423. La deuxième paroi radiale 423 ne forme qu'une unité avec la deuxième demi-barre 22. La première paroi radiale 421 comporte un alésage axial permettant à la première demi-barre 21 de faire saillie vers l'extérieur du deuxième boîtier 42 lorsque le premier boîtier 41 est en position à l'intérieur de celui-ci. Le premier boîtier 41 est maintenu libre en rotation à l'intérieur du deuxième boîtier 42 par un système de roulement à aiguilles 48.

Un frein électromécanique 43 est monté solidairement à la paroi radiale interne 415 du premier boîtier 41.

Contrairement au premier mode de réalisation, l'arbre de sortie 44 est couplé à un système d'engrenage initial comportant un pignon 51 monté sur l'arbre de sortie 44, une roue excentrique 52 et un plateau 54. La roue excentrique 52 est montée libre en rotation autour d'un arbre prévu sur la paroi radiale interne 415. Le plateau 54 possède une face comportant une roue 53 à denture intérieure et une face opposée comportant un arbre 55 se confondant avec l'axe principal A. La roue excentrique 52 engrène à la fois le pignon 51 et la roue 54 de manière à former un système d'engrenage permettant d'amplifier une première fois le couple de blocage généré par le frein électromécanique 43.

Tout comme le premier mode de réalisation, l'arbre 55 entraîne un premier engrenage, un deuxième engrenage (le chiffrage n'étant pas repris sur la figure 2 pour une question de clarté), un arbre en baïonnette 45. En variante, le deuxième mode de réalisation comporte un pignon de sortie 101 monté fixe sur la deuxième portion de l'arbre en baïonnette 45, une roue excentrée 102 montée libre en rotation sur l'arbre 414 intégralement formé sur la paroi radiale d'extrémité 413 du premier boîtier 41 et une roue 103 à denture intérieure intégralement formée sur la paroi axiale 422 du deuxième boîtier 42.

Un première ensemble d'amplification est constitué par les roues et pignons 61, 62, 71 et 72. Un deuxième ensemble d'amplification est constitué par les roues et pignons 101, 102 et 103.

Lorsqu'un couple est appliqué sur la deuxième demi-barre 22 apte à faire tourner le deuxième boîtier 42 autour de l'axe principal A d'un angle α₄₂, l'arbre 414 étant fixe, la roue 102 tourne autour de l'arbre 414 d'un angle positif α₁₀₂. Par conséquent, via le pignon 101, l'arbre en baïonnette 45 est déplacé en rotation autour de l'axe principal A selon un angle négatif α₄₅. Les première et deuxième demi-barres se trouvent alors découplées l'une de l'autre.

Deux cas se présentent alors. Dans un premier cas, le frein électromécanique 43 est verrouillé et le pignon 61 est libre en rotation. Aucune contrainte ne s'applique sur la première roue 62, qui, entraînée par l'arbre en baïonnette 45 tourne librement. Aucun couple n'est alors transmis au premier boîtier 41.

Dans un deuxième cas, lorsque le frein électromécanique 43 est verrouillé, une contrainte s'exerce sur le roulement de la roue 62 ce qui permet de transférer le couple appliqué par l'arbre en baïonnette 45 sur la première roue 62 le deuxième engrenage. En conséquence, la deuxième roue 72 est entraînée en rotation autour de l'axe principal A selon un angle négatif α₇₂. Dans ce deuxième cas, le premier boîtier 41 a donc tendance à tourner dans le sens opposé au mouvement de rotation du deuxième boîtier 42. Mais une contrainte supplémentaire est constituée par l'axe 414 autour duquel la roue 102 tourne. La rotation d'un angle négatif du premier boîtier 41 entraîne l'arbre 414 selon un angle négatif ayant tendance à faire tourner la roue 102 dans un sens négatif. Il y a donc incompatibilité entre les mouvements des premier et deuxième boîtiers 41 et 42 au niveau de la roue 102 imposant le couplage entre les deux demi-barres 21 et 22. Une démonstration identique pourrait être faite pour un déplacement du premier boîtier 41 montrant qu'il y a couplage du deuxième boîtier 42. En conséquence, dans ce deuxième cas, un couple peut être transmis d'une demi-barre à l'autre.

La contrainte sur le mouvement imposée entre les côtés de couple élevé par la liaison entre l'arbre 414 et la roue 102 est incompatible avec la contrainte sur le mouvement imposé par le frein électromécanique 43 du côté de faible couple. L'ensemble formé par l'arbre 414 et la roue 102 constitue un élément de contrainte.

Il est à noter que, en position verrouillée du frein électromécanique 43, les efforts sont transmis de la première demi-barre vers la deuxième demi-barre au travers de cet élément de contrainte. Cette disposition particulière permet de protéger le moyen électromécanique de verrouillage/déverrouillage.

Il est à noter que dans ce mode de réalisation, le frein électromécanique 43 agit au travers d'un premier étage d'amplification. Les couples de verrouillage/déverrouillage sont par conséquent faibles. Par ailleurs, le chemin des efforts transférés d'une demi-barre à l'autre ne passe pas par le moyen de verrouillage/déverrouillage.

Différentes stratégies pour palier les défaillances du moyen de verrouillage/déverrouillage peuvent être mises en place. L'actionnement du frein électromécanique 43 peut par exemple correspondre au verrouillage. Dans ces conditions, la position par défaut du frein 43 est l'état déverrouillé. En cas de panne, le mécanisme de couplage/découplage est donc découplé, ce qui favorise le comportement du véhicule et la sécurité des passagers. L'actionnement du frein électromécanique 43 peut sinon correspondre au déverrouillage. Dans ces conditions, la position par défaut du frein 43 est l'état verrouillé. En cas de panne, le mécanisme de couplage/découplage est donc couplé, ce qui favorise le confort des passagers.

Dans le système décrit, le couplage/découplage des deux demi-barres s'effectue sur un mode tout ou rien. En conséquence, la variable calculée par l'unité de contrôle peut être une variable binaire à deux états. Le programme exécuté par l'unité de contrôle 30 est simplifié par rapport, par exemple, au programme exécuté par une unité de contrôle destinée à commander un dispositif anti-roulis actif selon l'art antérieur.

En variante, le frein électromécanique 43 pourrait être commandé autour de son point de glissement. Tout couple de roulis d'intensité inférieure à une intensité seuil serait transmis, alors qu'un couple de roulis d'intensité supérieure à l'intensité seuil serait partiellement transmis, à hauteur de cette intensité seuil.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif anti-roulis semi-actif électromécanique pour équiper au moins un train de roues d'un véhicule automobile, chacune des roues dudit train de roues étant couplée avec une mobilité verticale à une caisse dudit véhicule au moyen d'une jambe de force, ledit dispositif anti-roulis comportant :
- une barre de torsion (1) en forme de U ayant une portion centrale (11) destinée à être montée solidairement à ladite caisse et parallèlement à un axe (A) dudit train de roues, et des premier et deuxième bras latéraux (12) dont les extrémités libres (13) sont destinées à être respectivement couplées audites jambes de force ; ladite barre de torsion étant composée d'une première demi-barre (21) et d'une deuxième demi-barre (22) reliées l'une à l'autre au niveau de ladite portion centrale au moyen d'un mécanisme électromécanique de couplage/découplage (40) apte à être actionné pour coupler/découpler lesdites première et deuxième demi-barres entre elles ;
- au moins un capteur (31) apte à mesurer au moins une variable cinématique dudit véhicule ; et,
- une unité de commande (30) apte à acquérir ladite au moins une variable cinématique, à calculer une variable d'état de roulis caractérisant une situation de roulis dudit véhicule, et à émettre un signal de commande correspondant à ladite variable d'état en direction dudit mécanisme électromécanique de couplage/découplage pour actionner ce dernier ;
dans lequel ledit mécanisme électromécanique de couplage/découplage (40) comporte un moyen électromécanique de verrouillage/déverrouillage (43), un système mécanique d'amplification de couple, ledit moyen électromécanique de verrouillage/déverrouillage étant couplé à un côté de faible couple dudit système mécanique d'amplification, lesdites première (21) et deuxième demi-barres (22) étant couplées du côté de couple élevé dudit système mécanique d'amplification ; **caractérisé en ce que** ledit moyen électromécanique de verrouillage/ déverrouillage est un frein électromécanique (43) apte à appliquer un couple de blocage.

2. Dispositif selon la revendication 1, **caractérisé en ce que** ledit système mécanique d'amplification comporte des premier et deuxième ensembles d'amplification, ladite première demi-barre (21) étant couplée du côté de couple élevé dudit premier ensemble d'amplification (61, 62 ; 71, 72), ladite deuxième demi-barre (22) étant couplée du côté de couple élevé dudit deuxième ensemble d'amplification (81, 82 ; 91, 92), et **en ce qu'**en position verrouillée dudit moyen électromécanique de verrouillage/déverrouillage (43) les côtés de faible couple desdits premier et deuxième ensembles d'amplification sont couplés l'un à l'autre.

3. Dispositif anti-roulis selon la revendication 2, **caractérisé en ce que** lesdits premier et deuxième ensembles d'amplification comportent respectivement deux étages successifs d'amplification.

4. Dispositif anti-roulis selon la revendication 3, **caractérisé en ce que** lesdits deux étages successifs d'amplification desdits premier et deuxième ensembles amplificateur sont constitués par des engrenages (61, 62 , 71, 72, 81, 82 ; 91, 92).

5. Dispositif anti-roulis semi-actif selon l'une des revendications 2 à 4, **caractérisé en ce que** le mécanisme électromécanique de couplage/découplage (40) comporte un élément de contrainte (414, 102) apte à contraindre le mouvement du côté de couple élevé dudit premier ensemble amplificateur relativement au mouvement du côté de couple élevé dudit deuxième ensemble amplificateur de sorte que lorsque le moyen électromécanique de verrouillage/déverrouillage (43) est en position verrouillée, tout déplacement dudit élément de contrainte est rendu impossible, les efforts passant alors de la première à la deuxième demi-barre (21, 22) au travers dudit élément de contrainte.

6. Dispositif selon l'une des revendications 1 à 5, **caractérisé en ce que** ledit frein électromécanique (43) est apte à ne générer que des couples de blocage de quelques newton-mètres suffisant pour coupler les première et deuxième demi-barres (21, 22).

7. Dispositif selon l'une des revendications 1 à 6, **caractérisé en ce que** ledit moyen électromécanique de verrouillage/déverrouillage (40) est apte à quitter la position verrouillée lorsqu'un couple de charge qui lui est appliqué a une amplitude supérieure à l'amplitude d'un couple de charge seuil prédéterminé.

8. Dispositif anti-roulis semi-actif selon l'une des revendications 1 à 7, **caractérisé en ce que** ladite unité de commande (30) actionne ledit moyen électromécanique de verrouillage/déverrouillage (43) selon un mode "tout ou rien".

9. Véhicule automobile comportant au moins un train de roues, chacune des roues dudit train de roues étant couplée avec une mobilité verticale à une caisse dudit véhicule par l'intermédiaire d'une jambe de force, **caractérisé en ce qu'**il comporte un dispositif anti-roulis semi-actif électromécanique selon l'une des revendications précédentes.

## Claims

1. Semi-active electromechanical anti-roll device to be fitted to at least one wheel-train of a motor vehicle, each of the wheels of the said wheel-train being coupled with vertical mobility to a body of the said vehicle by means of a torque rod, the said anti-roll device including:
- a U-shaped torsion bar (1) having a central portion (11) intended to be firmly mounted on the said body and parallel with an axis (A) of the said wheel-train, and first and second lateral arms (12) the free ends (13) of which are intended to be coupled to the said torque rods respectively; the said torsion bar being composed of a first half-bar (21) and a second half-bar (22) joined to each other at the said central portion by means of an electromechanical coupling/uncoupling mechanism (40) able to be actuated to couple/uncouple the said first and second half-bars to/from each other;
- at least one sensor (31) able to measure at least one kinematic variable of the said vehicle; and,
- a control unit (30) able to acquire the said at least one kinematic variable, to calculate a roll state variable characterising a roll situation of the said vehicle, and to emit a control signal corresponding to the said state variable to the said electromechanical coupling/uncoupling mechanism to actuate this;
in which the said electromechanical coupling/uncoupling mechanism (40) includes an electromechanical locking/unlocking means (43) and a mechanical torque amplification system, the said electromechanical locking/unlocking means being coupled to a low torque side of the said mechanical amplification system, the said first (21) and second (22) half-bars being coupled to the high torque side of the said mechanical amplification system; **characterised by** the fact that the said electromechanical locking/unlocking means is an electromechanical brake (43) able to apply a locking torque.

2. Device as described in claim 1, **characterised by** the fact that the said mechanical amplification system includes first and second amplification units, the said first half-bar (21) being coupled to the high torque side of the said first amplification unit (61, 62; 71, 72), the said second half-bar (22) being coupled to the high torque side of the said second amplification unit (81, 82; 91, 92), and by the fact that in the locked position of the said electromechanical locking/unlocking means (43) the low torque sides of the said first and second amplification units are coupled to each other.

3. Anti-roll device as described in claim 2, **characterised by** the fact that the said first and second amplification units respectively include two successive amplification stages.

4. Anti-roll device as described in claim 3, **characterised by** the fact that the said successive amplification stages of the said first and second amplification units are formed of gears (61, 62, 71, 72, 81, 82; 91, 92).

5. Semi-active anti-roll device as described in one of claims 2 to 4, **characterised by** the fact that the electromechanical coupling/uncoupling mechanism (40) includes a restraint element (414, 102) able to restrain the movement of the high torque side of the said first amplification unit relatively to the movement of the high torque side of the said second amplification unit so that when the electromechanical locking/unlocking means (43) is in the locked position, any displacement of the said restraint element is made impossible, the forces then passing from the first to the second half-bar (21, 22) through the said restraint element.

6. Device as described in one of claims 1 to 5, **characterised by** the fact that the said electromechanical brake (43) is able only to generate locking torques of a few Newton-metres sufficient to couple the first and second half-bars (21, 22).

7. Device as described in one of claims 1 to 6, **characterised by** the fact that the said electromechanical locking/unlocking means (40) is able to leave the locked position when a load torque which is applied to it has an amplitude greater than the amplitude of a predetermined threshold load torque.

8. Semi-active anti-roll device as described in one of claims 1 to 7, **characterised by** the fact that the said control unit (30) actuates the said electromechanical locking/unlocking means (43) in an "on/off" manner.

9. Motor vehicle including at least one wheel-train, each of the wheels of the said wheel-train being coupled with vertical mobility to a body of the said vehicle by means of a torque rod, **characterised by** the fact that it includes an electromechanical semi-active anti-roll device as described in one of the preceding claims.

## Patentansprüche

1. Semiaktive elektromechanische Stabilisatorvorrichtung für den Einbau in wenigstens einen Radsatz eines Kraftfahrzeugs, wobei jedes der Räder des genannten Radsatzes mittels eines Federbeins mit einer vertikalen Beweglichkeit mit der Karosserie des genannten Fahrzeugs gekoppelt ist, wobei die genannte Stabilisatorvorrichtung Folgendes umfasst:
-- einen U-förmigen Torsionsstab (1) mit einem mittleren Abschnitt (11) zum festen Montieren an der genannten Karosserie und parallel zu einer Achse (A) des genannten Radsatzes, und mit ersten und zweiten lateralen Armen (12), deren freie Enden (13) jeweils mit den genannten Federbeinen gekoppelt werden; wobei sich der genannte Torsionsstab aus einem ersten Teilstab (21) und einem zweiten Teilstab (22) zusammensetzt, die mit dem genannten mittleren Abschnitt mittels eines elektromechanischen Ver-/Entkopplungsmechanismus (40) verbunden sind, der zum Ver-/ Entkoppeln der genannten ersten und zweiten Teilstäbe mit-/ voneinander betätigt werden kann;
-- wenigstens einen Sensor (31) zum Messen von wenigstens einer kinematischen Variable des genannten Fahrzeugs; und
-- eine Steuereinheit (30) zum Erfassen der genannten wenigstens einen kinematischen Variablen, zum Berechnen einer Rollzustandsvariablen, die eine Rollsituation des genannten Fahrzeugs charakterisiert, und zum Ausgeben eines der genannten Zustandsvariablen entsprechenden Steuersignals zu dem genannten elektromechanischen Ver-/ Entkopplungsmechanismus, um diesen zu betätigen;
wobei der genannte elektromechanische Ver-/ Entkopplungsmechanismus (40) Folgendes umfasst: ein elektromechanisches Ver-/Entriegelungsmittel (43), ein mechanisches Drehmomentverstärkungssystem, wobei das genannte elektromechanische Ver-/Entriegelungsmittel mit der Niederdrehmomentseite des genannten mechanischen Verstärkungssystems gekoppelt ist, wobei der genannte erste (21) und der genannte zweite Teilstab (22) mit der Hochdrehmomentseite des genannten mechanischen Verstärkungssystems gekoppelt sind; **dadurch gekennzeichnet, dass** das genannte elektromechanische Ver-/Entriegelungssystem eine elektromechanische Bremse (43) zum Aufbringen eines Sperrmoments ist.

2. Vorrichtung nach Anspruch 1, **dadurch gekennzeichnet, dass** das genannte mechanische Verstärkungssystem eine erste und eine zweite Verstärkungsbaugruppe umfasst, wobei der genannte erste Teilstab (21) auf der Hochdrehmomentseite mit der genannten ersten Verstärkungsbaugruppe (61, 62; 71, 72) gekoppelt ist, wobei der genannte zweite Teilstab (22) mit der Hochdrehmomentseite der genannten zweiten Verstärkungsbaugruppe (81, 82; 91, 92) gekoppelt ist, und dadurch, dass die Niederdrehmomentseiten der genannten ersten und zweiten Verstärkungsbaugruppe in der Verriegelungsposition des genannten elektromechanischen Ver-/Entriegelungsmittels (43) miteinander gekoppelt sind.

3. Stabilisatorvorrichtung nach Anspruch 2, **dadurch gekennzeichnet, dass** die genannte erste und zweite Verstärkungsbaugruppe jeweils zwei aufeinander folgende Verstärkungsstufen umfassen.

4. Stabilisatorvorrichtung nach Anspruch 3, **dadurch gekennzeichnet, dass** die genannten zwei aufeinander folgenden Verstärkungsstufen der genannten ersten und zweiten Verstärkungsbaugruppe durch Zahnradgetriebe (61, 62, 71, 72, 81, 82; 91, 92) gebildet werden.

5. Semiaktive Stabilisatorvorrichtung nach einem der Ansprüche 2 bis 4, **dadurch gekennzeichnet, dass** der elektromechanische Ver-/Entkopplungsmechanismus (40) ein Halteelement (414, 102) umfasst, das die Bewegung der Hochdrehmomentseite der genannten ersten Verstärkungsbaugruppe relativ zur Bewegung der Hochdrehmomentseite der genannten zweiten Verstärkungsbaugruppe so beschränkt, dass in der Verriegelungsposition des elektromechanischen Ver-/ Entriegelungsmittels (43) eine Bewegung des genannten Halteelementes unmöglich gemacht wird, wobei die Kraft dann über das genannte Halteelement vom ersten auf den zweiten Teilstab (21, 22) übertragen wird.

6. Vorrichtung nach einem der Ansprüche 1 bis 5, **dadurch gekennzeichnet, dass** die genannte elektromechanische Bremse (43) so ausgelegt ist, dass sie nur Sperrdrehmomente von einigen Newton-Metern erzeugt, die ausreichen, um den ersten und den zweiten Teilstab (21, 22) miteinander zu koppeln.

7. Vorrichtung nach einem der Ansprüche 1 bis 6, **dadurch gekennzeichnet, dass** das genannte elektromechanische Ver-/Entriegelungsmittel (40) so ausgelegt ist, dass es die Verriegelungsposition verlässt, wenn eine Amplitude eines darauf aufgebrachten Lastmoments größer ist als eine vorbestimmte Lastmomentschwellenamplitude.

8. Semiaktive Stabilisatorvorrichtung nach einem der Ansprüche 1 bis 7, **dadurch gekennzeichnet, dass** die genannte Steuereinheit (30) das genannte elektromechanische Ver-/Entriegelungsmittel (43) gemäß einem "alles oder nichts" Modus betätigt.

9. Kraftfahrzeug mit wenigstens einem Radsatz, wobei jedes der Räder des genannten Radsatzes mittels eines Federbeins mit einer vertikalen Beweglichkeit mit einer Karosserie des genannten Fahrzeugs gekoppelt ist, **dadurch gekennzeichnet, dass** es eine semiaktive elektromechanische Stabilisatorvorrichtung nach einem der vorherigen Ansprüche umfasst.
